# EUROPEAN PATENT APPLICATION

(11) **EP 3 173 379 A1**
(43) Date of publication of application: **31.05.2017**
(21) Application number: 15196596.9
(22) Date of filing: 26.11.2015
(51) Int. Cl.: C01B 32/182

(54) **METHOD OF PRODUCING GRAPHENE STRUCTURES**

(71) Applicant: O'Flynn, Donal Paul, Dublin (IE); Shelley, William Franklin, Chandler, AZ 85249 (US)
(72) Inventor: O'Flynn, Donal Paul, Dublin (IE); Shelley, William Franklin, Chandler, AZ 85249 (US)
(74) Representative: Kelly, Donal Morgan

(57) **Abstract**

The present invention relates to a method for producing graphene structures, the method comprising the steps of providing a continuous substrate; forming graphene on or at the continuous substrate to provide a graphene structure; and removing the graphene structure from the continuous substrate. Also disclosed are methods for producing graphene tubes, graphene ribbons, and graphene films.

## Description

### Field of the Invention

This invention relates to a method for producing graphene structures by providing a substrate; forming a graphene on or at the substrate; and removing the substrate to provide a graphene structure. Also disclosed are graphene structures produced by that method; a further method for producing graphene fibres, and the graphene fibres produced by that further method.

### Background to the Invention

The present invention relates to a method for producing structures formed from graphene. In particular, the present invention provides a method for producing high modulus, high tensile strength carbon fibres. High performance carbon fibres are primarily made from a polyacrylonitrile (PAN) precursor fibre that is oxidized and then carbonized. 50% of the cost of the end-product carbon fibre is attributed to the PAN precursor. 40% of the total cost of production of PAN-based carbon fibres comes from the energy intensive, high temperature oxidation and carbonization processes. The final 10% of the cost is attributed to post treatment of the fibres. Research into carbon fibres produced from other precursors such as pitch, polyolefin, and lignin have failed to produce carbon fibres with the requisite tensile strength and elastic modulus.

Further to the initial substrate cost, the process variables that have a large impact on the final cost of producing structures formed from graphene include the lifetime of the substrate in service, and the residence time of the substrate in the hot zone of the reactor during graphene deposition. In an optimized system, the substrate would have the lowest possible initial cost and the longest possible service lifetime. The residence time of the substrate in the hot zone of the reactor should be minimized, so as to maximize graphene production rates in terms of structure length over time, for example, by increasing the temperature of the reactor, thus speeding the kinetics of hydrocarbon dissociation. The kinetics of hydrocarbon dissociation can also be improved by using Le Chatellier's principle and removing product hydrogen gas from the reactor vessel as it is liberated from the hydrocarbon source gas. It is also desirable to deposit the highest number of graphene layers on the substrate in the shortest possible time, so as to maximize the capture rate of graphene over a given residence time.

The present invention takes advantage of the unique properties of graphene that can be produced from various cheap hydrocarbon precursors and on various substrates.

### Summary of the Invention

According to a first aspect of the present invention, there is provided a method for producing graphene structures, the method comprising the steps of:
(a) providing a continuous substrate;
(b) forming graphene on or at the continuous substrate to provide a graphene structure; and
(c) removing the graphene structure from the continuous substrate.

According to a second aspect of the present invention, there is provided a method for producing graphene tubes, the method comprising the steps of:
(d) providing a continuous generally cylindrical substrate;
(e) forming graphene on or at the continuous substrate to provide a graphene tube; and
(f) removing the graphene tube from the continuous substrate.

According to a third aspect of the present invention, there is provided a method for producing graphene films, the method comprising the steps of:
(a) providing a continuous generally planar substrate;
(b) forming graphene on or at the continuous substrate to provide a graphene film; and
(c) removing the graphene film from the continuous substrate.

By the term "continuous" is meant having no point of discontinuity, and is intended to exclude any break, gap, opening, similar interruption, or a combination thereof, to the substrate.

Optionally, the substrate forms a loop. Further optionally, the substrate forms a continuous (or endless) loop.

The continuous substrate can be any substrate on or at which graphene can be formed. Preferably, the continuous substrate can be any substrate on or at which graphene can be formed and from which the formed graphene structure can be removed.

Optionally, the continuous substrate is a continuous ribbon. Further optionally, the continuous substrate is a continuous planar ribbon. However, it is appreciated that the continuous ribbon can be of any cross-sectional dimension required to produce a graphene tube.

Optionally or additionally, the continuous substrate comprises at least one continuous ribbon. Further optionally or additionally, the continuous substrate comprises a plurality of continuous ribbons. Optionally or additionally, the continuous substrate comprises at least one continuous planar ribbon. Further optionally or additionally, the continuous substrate comprises a plurality of continuous planar ribbons.

Optionally, the continuous substrate is a continuous plate. Further optionally, the continuous substrate is a continuous planar plate. However, it is appreciated that the continuous plate can be of any cross-sectional dimension required to produce a graphene film.

Optionally, the continuous substrate is a continuous wire. Further optionally, the continuous substrate is a continuous cylindrical wire. However, it is appreciated that the continuous wire can be of any cross-sectional shape required to produce the graphene tube.

Optionally or additionally, the continuous substrate comprises at least one continuous wire. Further optionally or additionally, the continuous substrate comprises a plurality of continuous wires. Optionally or additionally, the continuous substrate comprises at least one continuous cylindrical wire. Further optionally or additionally, the continuous substrate comprises a plurality of continuous cylindrical wires.

Optionally, the continuous substrate comprises a plurality of continuous substrates.

Optionally, the continuous substrate is formed from a material having an elastic modulus (E) of 75 - 463 gigapascals. Further optionally, the continuous substrate is formed from a material having an elastic modulus (E) of 75, 89, 107, 110, 162, 186, 189, 207, 220, 279, 407, or 463 gigapascals.

Optionally or additionally, the continuous substrate is formed from a material having an ultimate tensile strength (UTS) of 48.3 - 4840 megapascals. Further optionally or additionally, the continuous substrate is formed from a material having an ultimate tensile strength (UTS) of 48.3, 83, 220, 262, 330, 480, 552, 586, 655, 1070, or 4840 megapascals.

Optionally or additionally, the continuous substrate is formed from a material having an annealed elongation of 2 - 70%. Further optionally or additionally, the continuous substrate is formed from a material having an annealed elongation of 2, 3.15, 15, 25, 30, 35, 40, 44, 45, or 70%.

Optionally or additionally, the continuous substrate is formed from a material having a melting point of 1085 - 3400°C. Further optionally or additionally, the continuous substrate is formed from a material having a melting point of 1085, 1220, 1399, 1400, 1420, 1427, 1453, 1538, 1665, 1800, 1907, 3186, 3400°C.

Optionally or additionally, the continuous substrate is formed from a material having a density of 2.203 - 21.02 g/cm³. Further optionally or additionally, the continuous substrate is formed from a material having a density of 2.203, 2.65, 4.5, 7.14, 7.87, 8.02, 8.6, 8.73, 8.85, 8.9, 8.94, 19.3, or 21.02 g/cm³.

Optionally or additionally, the continuous substrate is formed from a material having a coefficient of thermal expansion (CTE) of 0.5 - 17.3 ppm/°C. Further optionally or additionally, the continuous substrate is formed from a material having a coefficient of thermal expansion (CTE) of 0.5, 4.44, 6.2, 7.14, 8.1, 11.8, 12.8, 13.7, 14.9, 16.42, 16.8, or 17.3 ppm/°C.

Optionally, the continuous substrate is formed from a material selected from copper, nickel, chromium, stainless steel, silicon dioxide, aluminium (III) oxide, iron, titanium, tungsten, rhenium, constantan, a nickel/chromium alloy such as Chromel® from Concept Alloys, Inc; a nickel, manganese, aluminium and silicon alloy such as Alumel® from Concept Alloys, Inc; basalt, polyethylene, and mixtures each thereof.

Optionally, the continuous substrate is formed from a metal or metal alloy. Further optionally, the continuous substrate is formed from a plastic metal or metal alloy. Further optionally, the continuous substrate is formed from a ductile metal or metal alloy. Alternatively the continuous substrate is formed from a malleable metal or metal alloy.

Optionally, the continuous substrate is formed from a metal or metal alloy selected from copper, nickel, chromium, and stainless steel.

Optionally, the continuous substrate is formed from copper.

Optionally or additionally, the continuous substrate comprises at least one continuous copper wire. Further optionally or additionally, the continuous substrate comprises a plurality of continuous copper wires. Optionally or additionally, the continuous substrate comprises at least one continuous cylindrical copper wire. Further optionally or additionally, the continuous substrate comprises a plurality of continuous cylindrical copper wires.

Optionally, the continuous substrate has a cross sectional diameter of about 10 to about 10,000 micrometres (µm). Further optionally, the continuous substrate has a cross sectional diameter of about 10 to about 100 micrometres (µm).

Optionally or additionally, the continuous substrate comprises at least one continuous copper wire having a cross sectional diameter of about 10 to about 10000 micrometres (µm). Further optionally or additionally, the continuous substrate comprises a plurality of continuous copper wires, each having a cross sectional diameter of about 10 to about 10000 micrometres (µm). Optionally or additionally, the continuous substrate comprises at least one continuous cylindrical copper wire having a cross sectional diameter of about 10 to about 10000 micrometres (µm). Further optionally or additionally, the continuous substrate comprises a plurality of continuous cylindrical copper wires, each having a cross sectional diameter of about 10 to about 10000 micrometres (µm).

Alternatively, the continuous substrate comprises at least one continuous copper ribbon. Further optionally or additionally, the continuous substrate comprises a plurality of continuous copper ribbons. Optionally or additionally, the continuous substrate comprises at least one continuous planar copper ribbon. Further optionally or additionally, the continuous substrate comprises a plurality of continuous planar copper ribbons.

Optionally, the continuous substrate has a thickness of about 10 to about 1000 micrometres (µm).

Optionally or additionally, the continuous substrate comprises at least one continuous copper ribbon having a thickness of about 10 to about 1000 micrometres (µm). Further optionally or additionally, the continuous substrate comprises a plurality of continuous copper ribbons, each having a thickness of about 10 to about 1000 micrometres (µm). Optionally or additionally, the continuous substrate comprises at least one continuous planar copper ribbon having a thickness of about 10 to about 1000 micrometres (µm). Further optionally or additionally, the continuous substrate comprises a plurality of continuous planar copper ribbons, each having a thickness of about 10 to about 1000 micrometres (µm).

Alternatively, the continuous substrate comprises at least one continuous copper film having a thickness of about 10 to about 1000 micrometres (µm). Further optionally or additionally, the continuous substrate comprises a plurality of continuous copper films, each having a thickness of about 10 to about 1000 micrometres (µm). Optionally or additionally, the continuous substrate comprises at least one continuous planar copper film having a thickness of about 10 to about 1000 micrometres (µm). Further optionally or additionally, the continuous substrate comprises a plurality of continuous planar copper films, each having a thickness of about 10 to about 1000 micrometres (µm).

By "wire" is meant a continuous substrate having substantially the same cross sectional dimensions i.e. the dimensions on or at the polar axis are substantially the same.

By "ribbon" is meant a continuous substrate having a circumferential length of greater dimension that width, and the circumferential length and the width are each greater than the thickness (depth). The width is generally less than half the dimension of the circumferential length.

By "film" is meant a continuous substrate having a circumferential length of greater dimension that width, and the circumferential length and the width are each greater than the thickness (depth). The width is generally greater than half the dimension of the circumferential length.

Optionally, the forming graphene step comprises providing a carbon source. Further optionally, the forming graphene step comprises providing a hydrocarbon source.

Optionally, the method comprises the steps of:
(a) providing a continuous substrate;
(b) providing a carbon source;
(c) forming graphene on or at the continuous substrate a graphene structure; and
(d) removing the graphene structure from the continuous substrate.

Optionally, the providing a carbon source step comprises heating the continuous substrate. Further optionally, the providing a carbon source step comprises heating the continuous substrate to a temperature up to 1400°C. Still further optionally, the providing a carbon source step comprises heating the continuous substrate to a temperature of 800 - 1400°C. Still further optionally, the providing a carbon source step comprises heating the continuous substrate to a temperature of 800 - 1000°C.

Further optionally, the providing a carbon source step comprises heating the continuous substrate by applying a heat source. Further optionally, the providing a carbon source step comprises heating the continuous substrate by applying a heat source selected from resistive heating, combustion burners, induction heating, and plasma.

Optionally or additionally, the providing a carbon source step comprises providing a gaseous carbon source. Further optionally or additionally, the providing a carbon source step comprises providing methane or ethylene.

Optionally or additionally, the providing a carbon source step comprises providing a liquid carbon source. Further optionally, the providing a carbon source step comprises spraying a liquid carbon source.

Optionally, the carbon source is an oil product. Further optionally, the carbon source is an oil distillate. Still further optionally, the carbon source is a heavy oil distillate. Still further optionally, the carbon source is an oil residuum.

Optionally, the carbon source is a petroleum product. Further optionally, the carbon source is a petroleum distillate. Still further optionally, the carbon source is a heavy petroleum distillate. Still further optionally, the carbon source is a petroleum residuum.

Optionally, the providing a carbon source step comprises providing petroleum jelly or paraffin wax. Further optionally or additionally, the providing a carbon source step comprises spraying petroleum jelly or paraffin wax.

Optionally, the providing a carbon source step is conducted in the absence of a medium. Further optionally, the providing a carbon source step is conducted in the absence of a fluid medium. Still further optionally, the providing a carbon source step is conducted in the absence of air. Still further optionally, the providing a carbon source step is conducted in the absence of oxygen. Still further optionally, the providing a carbon source step is conducted under vacuum.

Optionally, the forming graphene step comprises forming a single layer of graphene on or at the continuous substrate. Further optionally, the forming graphene step comprises forming more than one layer of graphene on or at the continuous substrate. Still further optionally, the forming graphene step comprises forming a plurality of layers of graphene on or at the continuous substrate.

Optionally, the forming graphene step further comprises the step of removing hydrogen.

Optionally, the removing the graphene structure step comprises releasing the graphene structure from the continuous substrate.

Optionally, the removing the graphene structure step comprises releasing the graphene structure from the continuous substrate by introducing a point of discontinuity to the graphene structure. Further optionally, the removing the graphene structure step comprises releasing the graphene structure from the continuous substrate by introducing a break, gap, opening, similar interruption, or a combination thereof to the graphene structure.

Optionally, the removing the graphene structure step comprises irradiating the graphene structure with radiation. Further optionally, the removing the graphene structure step comprises irradiating the graphene structure with a laser. Still further optionally, the removing the graphene structure step comprises irradiating the graphene structure with a laser to introduce a point of discontinuity to the graphene structure.

Optionally, the laser is selected from a solid-state laser, a dye laser, a gas laser, and a laser diode. Further optionally, the laser is a laser diode.

Optionally, the laser is a red laser diode. Alternatively, the laser is an infrared laser diode.

Optionally or additionally, the removing the graphene structure step further comprises degassing the graphene structure.

Also disclosed is an apparatus for producing graphene structures, the apparatus comprising a reaction chamber for forming graphene on or at a continuous substrate; and means for removing the graphene structure from the continuous substrate.

Optionally, the reaction chamber comprises a heat source. Further optionally, the reaction chamber comprises a heat source selected from a resistive heater, a combustion burner, an induction heater, and a plasma generator.

Optionally, the reaction chamber is adapted to receive a continuous substrate. Further optionally, the reaction chamber is adapted allow the passage of a continuous substrate therethrough.

Optionally, the reaction chamber comprises at least one aperture to allow the passage of the continuous substrate therethrough. Further optionally, the reaction chamber comprises at least two apertures to allow the passage of the continuous substrate therethrough. Still further optionally, the reaction chamber comprises two apertures to allow the passage of the continuous substrate therethrough.

Optionally, the reaction chamber comprises first and second apertures to allow the passage of the continuous substrate therethrough. Optionally, the first aperture is arranged to allow access of the continuous substrate to the reaction chamber. Optionally or additionally, the second aperture is arranged to allow egress of the continuous substrate from the reaction chamber.

Optionally, the continuous substrate comprises a plurality of continuous substrates. Further optionally, the continuous substrate comprises a plurality of continuous substrates arranged about the reaction chamber. Still further optionally, the continuous substrate comprises a plurality of continuous substrates arranged radially about the reaction chamber. Still further optionally, the continuous substrate comprises a plurality of continuous substrates arranged radially about the longitudinal axis of the reaction chamber.

Optionally, the reaction chamber is adapted to receive a carbon source. Further optionally, the reaction chamber is adapted to receive a hydrocarbon source. Optionally, the reaction chamber comprises a carbon source reservoir. Further optionally, the reaction chamber comprises a hydrocarbon source reservoir.

Optionally, the reaction chamber is adapted to provide a vacuum. Optionally, the reaction chamber comprises a vacuum pump.

Optionally, the means for removing the graphene structure from the continuous substrate comprises a laser.

Optionally, the laser is selected from a solid-state laser, a dye laser, a gas laser, and a laser diode. Further optionally, the laser is a laser diode.

Optionally, the laser is a red laser diode. Alternatively, the laser is an infrared laser diode.

### Brief Description of the Drawings

Embodiments of the present invention will now be described with reference to the accompanying drawings and non-limiting examples, in which:

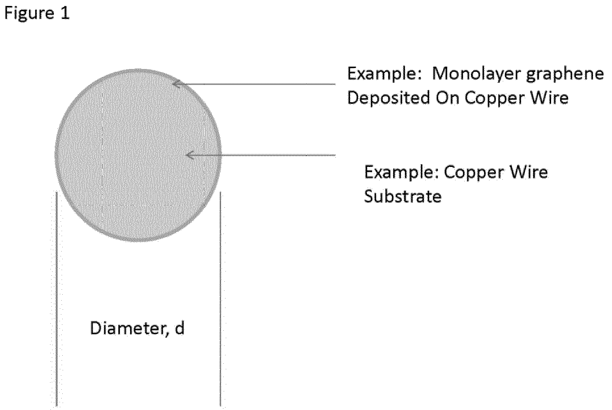

Figure 1 is a cross sectional view of a copper wire substrate having graphene formed on or at the substrate in a method according to the present invention;

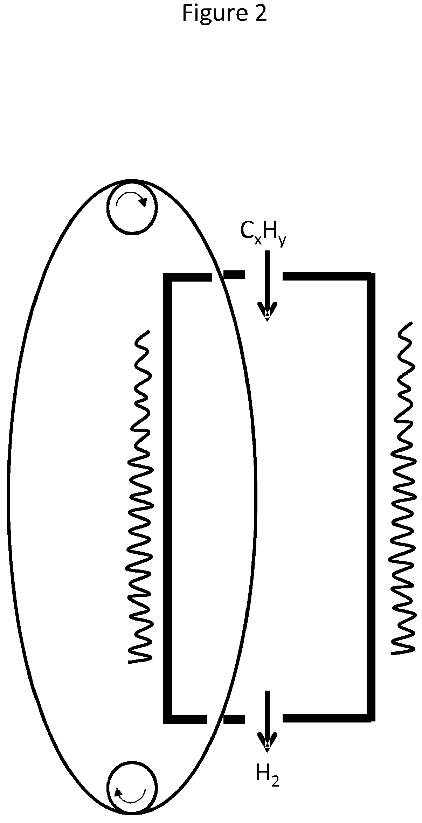

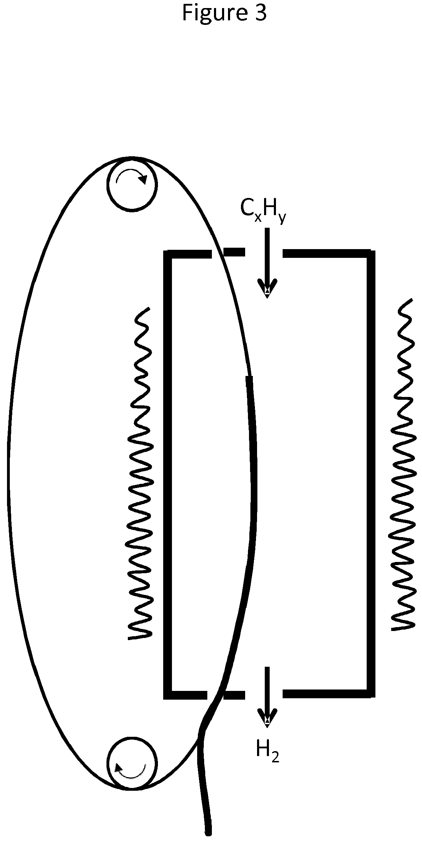

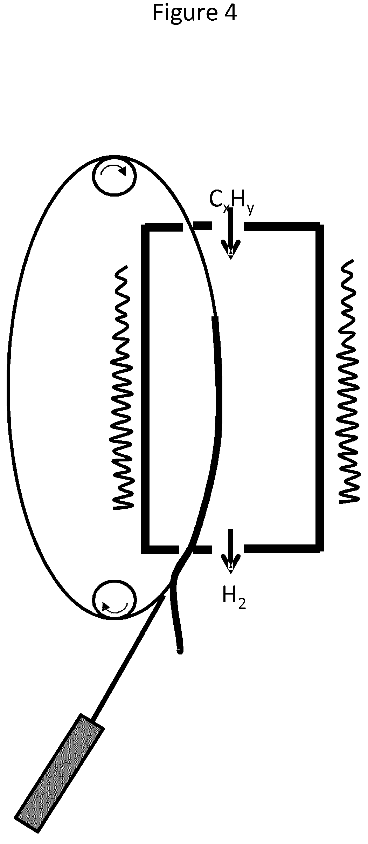

Figures 2-4 are each a schematic diagram of an apparatus for conducting a method according to the present invention;

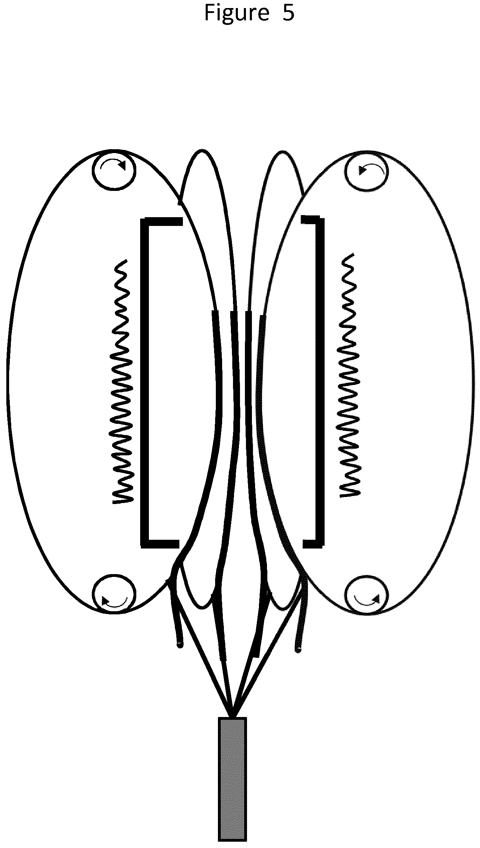

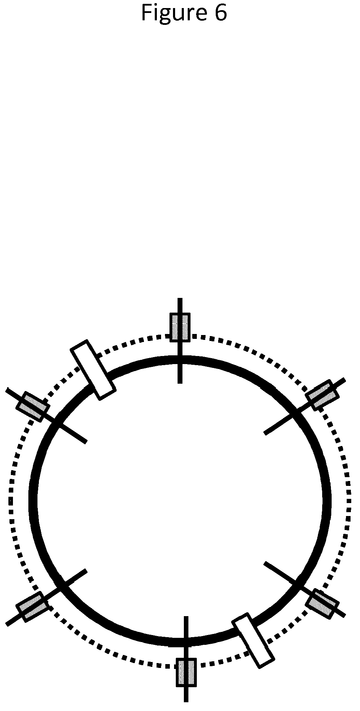

Figures 5 and 6 are each a schematic diagram of a preferred embodiment of an apparatus for conducting a method according to the present invention; and
Figure 7 is a schematic diagram of a plan view of a preferred embodiment of an apparatus for conducting a method according to the present invention.

### Detailed Description of the Invention

The present invention provides a method for producing graphene structures. The method comprises the steps of providing a continuous substrate; forming graphene on or at the continuous substrate to provide a graphene structure; and removing the graphene structure from the continuous substrate.

The method of the present invention can be used for producing graphene tubes by providing a continuous generally cylindrical substrate; forming graphene on or at the continuous substrate to provide a graphene tube; and removing the graphene tube from the continuous substrate. Moreover, the method can be used for producing graphene fibres by providing more than one graphene tube (which can be more than one graphene tube produced by a method according to a first aspect of the present invention or any graphene tube); assembling the more than one graphene tube into a contiguous bundle; and deforming the contiguous bundle to provide a graphene fibre.

The method can be used for producing graphene films by providing a continuous generally planar substrate; forming graphene on or at the continuous substrate to provide a graphene film; and removing the graphene film from the graphene substrate.

### Producing graphene fibres

Continuous loop copper wires, each having a diameter of 10 µm to 1 cm in diameter were used. Other substrates may also be used instead of copper such as nickel, stainless steel, SiO2, Al2O3, etc. The copper wire is used due to its commercial availability in a range of diameters. The form factor of the substrate may be as a cylindrical wire loop or a flat ribbon loop or foil loop, as examples.

The continuous loop copper wires are fed about rollers or tensioners into a reaction chamber (reactor zone) that is heated. The source of heat may be any energy source that can provide reaction chamber temperatures up to 1000°C, such as resistive heating, combustion burners, induction heating, etc. RF or DC plasma may also be used to provide a temperature within the plasma high enough to crack the precursor hydrocarbon.

A low cost hydrocarbon source is fed into the heated reaction chamber. This may be a gaseous precursor such as methane or ethylene. It may also be a solid or liquid precursor such as petroleum jelly, paraffin wax, etc., that may boil and become gaseous at the reaction chamber temperature. Liquid precursor may be introduced into the reactor chamber in a reservoir to generally fill the reactor chamber with gaseous vapors, or may be applied directly to the substrate via a dip coating or spraying method.

The heat provided in the reaction chamber is sufficient to cause thermal cracking of the hydrocarbon precursor. The continuous copper substrate will act as a catalyst for the thermal dissociation of the hydrocarbon precursor and carbon will deposit on the continuous substrate in the form of graphene.

The atmosphere within the reaction chamber can be controlled by differential pumping though multiple reactor zones so that the substrate can transition from atmospheric pressure to moderately high vacuums or slightly positive pressures. Oxygen must be eliminated from the reactor vessel to prevent oxidation of the hydrocarbon into CO or CO₂. The temperature the reaction chamber and the feed rate of the continuous copper substrate (so time and temperature) will determine the form of the graphene deposited on the continuous substrate, such as monolayer graphene, or few layer graphene.

Upon thermal dissociation of the hydrocarbon, hydrogen gas is also produced according to the example equation: CH₄ + heat -> C + 2H₂

In this example, the carbon deposits on the continuous copper substrate in the form of graphene. The liberated hydrogen gas can then be separated from the hydrocarbon gases within the reaction chamber by a gas separation membrane. The hydrogen gas may be used as a gaseous fuel for combustion or may be further combined with nitrogen to form liquid ammonia or energy dense liquid fuels. The continuous copper substrates now coated with graphene are further fed out of the reactor vessel at a controlled rate.

The graphene structures formed on the continuous copper substrate can then be removed by laser scribing, resulting in free, continuous, hollow tubes of graphene with an inside diameter determined by the outside diameter of the continuous copper wire.

The free graphene tubes or ribbons can then be degassed via heat and vacuum.

As the continuous copper wires or substrates may be fed into the reactor vessel as a plurality, the resulting plurality of free graphene tubes may now be twisted into long, continuous graphene conductors, analogous to the twisted copper conductors in conventional electrical wire or cable. As the fibre is twisted, the graphene tubes will collapse, eliminating the inside diameter of each tube. The twisted fibre may be pulled (tensioned) sufficiently that a dense conductor core is achieved.

The twisted graphene fibre may then be coated with conventional polymeric insulator materials such as polyvinylchloride (PVC) or teflon, as in traditional copper wire.

The resulting graphene conductor wire or cable will be strong, lightweight, and can support a higher current density than traditional copper conductor wire. This will result in lower line loss due to resistance. For long transmission lines, graphene conductor wires or cables could be joined by a coupler to extend the overall length to many kilometres.

Graphene has excellent electrical and thermal conductivity and is ideal as an electrode or conductor. Graphene is known to be able to carry the highest current density of any material at room temperature. Graphene also has excellent mechanical strength and is extremely light weight.

Presently, growing large area graphene is extremely difficult. Typically, large area graphene is considered to be on the order of 50 mm x 50 mm. The limitation in growing larger area sheets of graphene is due to the limitations of the size of the chemical vapour deposition systems used for the growth of graphene and the ability to control heating rate, cooling rate, and absolute temperature. In addition, present systems are typically batch process tube furnaces. In the present methods, the reactor zone use for graphene growth is up to a few meters in diameter, allowing the growth of extremely large area graphene. In addition, as described in previous embodiments, the system allows for continuous processing. The absolute temperature of the proposed system will be maintained due to the extremely large thermal mass and the fact that the system will be operated continuously, eliminating heat-up and cool-down cycles. The heating and cooling rates of the graphene growth on the continuous copper substrate are controlled by the rate at which the substrate is moved through the reactor zone. The use of differential pumping at the inlet and the outlet of the reactor allows for continuous feed into the reactor and can be used to control heating and cooling rates.

The choice of material forming the continuous substrate is critical to the design of a cost-effective and robust system. The properties of the material forming the continuous substrate that have a significant impact on the final choice of material include ultimate tensile strength (UTS), elastic (Young's) modulus (E), elongation at break (a measure of ductility), coefficient of thermal expansion (CTE), melting point, and cost (both raw material cost and processing cost to produce the form, shape, and dimension of the substrate).

In a preferred embodiment, each substrate is formed in a continuous loop and is moved in a circuit using rollers or tensioners. In order to maximize the lifetime of the continuous substrates, a high ultimate tensile strength is desired. High tensile strength will allow the continuous substrate to survive the mechanical stresses that are imparted to the continuous substrate by the rollers or tensioners and by the thermal gradients from the exterior of the reaction chamber to the interior of the reaction chamber.

The elastic modulus of the continuous substrate should also be maximized to allow the rollers or tensioners to maintain taut tension on the continuous substrate without plastic deformation. As the continuous substrate will be in the order of tens to hundreds of micrometers in diameter, a high elastic modulus will be required, along with a multitude of continuous substrates in parallel on the roller or tensioner.

Ductility is a key characteristic in the optimal substrate material. Elongation at break is a characteristic that gives an indication of ductility during a tensile test. A material with high elongation at break is considered to be less prone to brittle fracture failures in service. As the continuous substrate will be wound around the relatively tight radius of the roller or tensioner, a brittle material would be prone to low cycle and high cycle fatigue failures.

Once the graphene structure has been deposited on the substrate and is being released from the substrate outside of the reaction chamber, the coefficient of thermal expansion (CTE) will be critical. A high mismatch in CTE between the material forming the continuous substrate and the graphene structure will work to facilitate the release of the graphene structure from the continuous substrate. Here, a high CTE for the material forming the continuous substrate is desired. However, a material having a high CTE will also require more adjustment of the roller or tensioner to account for the thermal expansion of the continuous substrate in the reaction chamber and to maintain a taut tension on the continuous substrate.

A substrate with a high melting point is desired. Temperatures commonly used for graphene deposition are on the order of 800°C to 1400°C. Obviously, the melting point of the material forming the continuous substrate must be higher than the process temperature, to prevent melting of the substrate. The homologous temperature (T_{H}) is a ratio of the process temperature of a given system to the melting point of the material of concern. The homologous temperature should always be less than 1, and the lower T_{H}, the better.

The cost of the material forming the continuous substrate impacts both capital expenditure (CAPEX) requirements and operational expenditure (OPEX) requirements. The CAPEX cost will be experienced in the initial assembly of the apparatus for producing graphene structures, and the OPEX cost will be experienced due to the requisite periodic replacement of the continuous substrates for preventive maintenance. Due to the thermal/mechanical stresses experienced by the continuous substrates in service, they are not expected to have an infinite lifetime. Thus the lowest cost material is desirable. However, a higher cost material may be chosen for its higher strength and resulting longer service lifetime (less frequent replacement required) such that the lifetime apparatus cost is minimized even though the one time cost is higher. While the raw material commodity cost is a strong driver for the overall cost of the continuous substrate, the processing cost for forming a given material into, for example, a micro-wire may also be significant. Thus the total cost of the continuous substrate must be considered.

There are many candidate materials for forming the continuous substrate, from elemental metals such as copper, nickel, iron, titanium, tungsten, rhenium, and chromium; alloys such as stainless steel, constantan, Chromel®, and Alumel®; inorganics such as fused silica and basalt; composite substrates such as an iron core with a thin film shell of chromium or an iron core with a thin film shell of rhenium; and hydrocarbon substrates such as de-hydrogenated polyethylene.

Copper is a common substrate used in graphene deposition.

Other suitable candidate materials such as iron, nickel, titanium, tungsten, rhenium, and chromium provide higher melting point options as compared to copper.

Several alloys would provide a good combination of thermomechanical properties and cost as candidate materials. Stainless Steel (300 series or 400 series), constantan, Chromel®, and Alumel® all have higher strength and a higher melting point than copper. Constantan, Chromel®, and Alumel® are commonly used for the production of thermocouples. As such, these alloys are currently mass produced in fine gage wire.

Inorganic fibers such as fused silica (SiO₂) and basalt have high melting points and may provide low cost material options. They are made from abundant minerals, which could be mined and processed at distributed sites and allow to local use of resources.

Rhenium and chromium may serve as thin film protective layers over another bulk material to provide a core-shell composite continuous substrate. Rhenium and chromium both have very high melting points compared to copper. Both materials would also provide corrosion resistance to an underlying bulk material such as iron. Iron is a candidate material for forming continuous substrates due to its extremely low raw material cost and abundance. Rhenium or chromium can be deposited on the surface of a continuous iron substrate in thin film form via sputtering and will provide a protective coating to prevent oxidation of the iron. The thin film of rhenium or chromium would be on the order of 1000Å thick and would also act as a diffusion barrier to prevent the diffusion of carbon from the hydrocarbon dissociation into the iron. Such composite core-shell substrates of a 100 µm diameter iron wire with a 1000-2000Å sputtered coating of rhenium or chromium are expected to have very long service lifetimes, leading to overall lower OPEX.

Iron, copper, nickel, stainless steel, titanium, and rhenium have all been shown to be acceptable catalysts for graphene deposition. Constantan, Chromel®, and Alumel® are all alloys containing copper and/or nickel. Thus, all should be acceptable catalysts for graphene deposition. The inorganic substrates, silica and basalt, would likely need a thin film sputtered coating of a metallic element from the list above to act as the catalyst on the substrate.

## Claims

1. A method for producing graphene structures, the method comprising the steps of:
(a) providing a continuous substrate;
(b) forming graphene on or at the continuous substrate to provide a graphene structure; and
(c) removing the graphene structure from the continuous substrate.

2. A method according to Claim 1, wherein the continuous substrate is formed from a material selected from copper, nickel, chromium, stainless steel, silicon dioxide, aluminium (III) oxide, iron, titanium, tungsten, rhenium, constantan, a nickel/chromium alloy; a nickel, manganese, aluminium and silicon alloy; basalt, polyethylene, and mixtures each thereof.

3. A method according to Claim 1 or 2, wherein the continuous substrate comprises at least one continuous copper wire.

4. A method according to any one of Claims 1-3, wherein the continuous substrate comprises a plurality of continuous copper wires.

5. A method according to any one of Claims 1-4, wherein the or each continuous substrate has a cross sectional diameter of about 10 to about 10,000 micrometres (µm).

6. A method according to any one of Claims 1-5, wherein the forming graphene step comprises forming more than one layer of graphene on or at the continuous substrate.

7. A method according to any one of Claims 1-6, wherein the forming graphene step further comprises the step of removing hydrogen.

8. A method according to any one of Claims 1-7, wherein the removing the graphene structure step comprises releasing the graphene structure from the continuous substrate by introducing a point of discontinuity to the graphene structure.

9. A method according to any one of Claims 1-8, wherein the removing the graphene structure step comprises irradiating the graphene structure with a laser to introduce a point of discontinuity to the graphene structure.

10. A method according to Claim 9, wherein the laser is selected from a solid-state laser, a dye laser, a gas laser, and a laser diode.

11. An apparatus for producing graphene structures, the apparatus comprising a reaction chamber for forming graphene on or at a continuous substrate; and means for removing the graphene structure from the continuous substrate.

12. An apparatus according to Claim 11, wherein the reaction chamber comprises first and second apertures to allow the passage of the continuous substrate therethrough, whereby the first aperture is arranged to allow access of the continuous substrate to the reaction chamber, and the second aperture is arranged to allow egress of the continuous substrate from the reaction chamber.

13. An apparatus according to Claim 11 or 12, wherein the means for removing the graphene structure from the continuous substrate comprises a laser.

14. A method according to any one of Claims 1-10 or an apparatus according to any one of Claims 11-13, wherein the continuous substrate comprises a plurality of continuous substrates.

15. A method according to any one of Claims 1-10 or an apparatus according to any one of Claims 11-13, wherein the continuous substrate comprises a plurality of continuous substrates arranged radially about the longitudinal axis of the reaction chamber.
